# EUROPEAN PATENT APPLICATION

(11) **EP 1 562 183 A2**
(43) Date of publication of application: **10.08.2005**
(21) Application number: 05002404.1
(22) Date of filing: 04.02.2005
(51) Int. Cl.: G11B 5/62

(54) **Magnetic recording medium**

(30) Priority: 05.02.2004 JP 2004028928
(71) Applicant: Fuji Photo Film Co., Ltd., Kanagawa (JP)
(72) Inventor: Ejiri, Kiyomi, Odawara-shi Kanagawa (JP)
(74) Representative: HOFFMANN - EITLE

(57) **Abstract**

A magnetic recording medium comprising a flexible nonmagnetic support and a magnetic layer containing ferromagnetic alloy powder and a binder, wherein the magnetic layer has an average thickness of from 0.03 to 0.2 µm, the ferromagnetic alloy powder has an average long axis length of from 10 to 65 nm, the magnetic layer has a coercive force in a recording direction of from 180 to 290 kA/m, and a product of the coercive force and a switching field distribution in the recording direction of the magnetic layer is from 30 to 130 kA/m.

## Description

### FIELD OF THE INVENTION

The present invention relates to a magnetic recording medium, in particular a coating type recording medium for high density recording having a high SN ratio and excellent in overwriting characteristics.

### BACKGROUND OF THE INVENTION

In recent years, recording density has been remarkably improved in magnetic recording media, e.g., a magnetic disc and a magnetic tape. In magnetic recording media applicable to high density recording, the improvement of the coercive force (Hc) of magnetic powders, fining of magnetic powders, and thinning of a magnetic layer have been advanced.

The thinning of a magnetic layer is an effective means to improve the resolution of digital recording. In particular, the effect is great when a high sensitivity magneto-resistance type (MR) head is used, and this fact is reported as the experimental results of using deposited tapes formed by depositing a magnetic metal thin film (e.g., IEEE trans. mag., Vol. 35, No. 2, p. 729 (1999) and Technical Report by the Association of Image Information Media, Vol. 23, No. 78, p. 21 (1999)).

On the other hand, when an MR head is used in reproduction in coating type magnetic recording media using ferromagnetic alloy powders capable of obtaining high performance with conventional induction type magnetic heads, high noise is generated at the time of reproduction, in addition, saturation of MR elements is also easily caused, so that high SN ratio (SNR) cannot be obtained. Therefore, in particular for high density recording for use in the reproduction with an MR head, fining of the particle sizes of conventionally known acicular alloy powders (hereinafter sometimes referred to as "metal powders") mainly comprising iron has been done, and metal powders having a long axis length of 100 nm or less are already put to practical use. The maintenance of shapes of these metal powders becomes difficult and it is also difficult to obtain high Hc mainly due to the anisotropy of shapes as the long axis length becomes shorter, so that average Hc is improved by using cobalt as the alloy component. However, the variation of the shapes of magnetic powders becomes large as particles are fined, and resolution and overwriting (O/W) characteristics in high density recording deteriorate by the increase in switching field distribution (SFD) resulting from the shape distribution. SFD is also influenced by the orientation of particles in addition to the variation of shapes. When particles are fined, an orientation property by floating of a magnetic coating solution lowers and SFD tends to become large.

There are prior arts that prescribe Hc and SFD in the case where fine magnetic particles are used, for example, a magnetic recording medium using hexagonal ferrite as the magnetic powder to make SFD 0.3 or less for the purpose of obtaining high output is disclosed in JP-A-6-215351 (The term "JP-A" as used herein refers to an "unexamined published Japanese patent application".). However, when tabular magnetic particles such as hexagonal ferrite are arranged in a magnetic field to achieve a low SFD, magnetic particles are stacking on tabular planes each other, so that high output can be achieved but sufficient SNR cannot be obtained.

Further, as the cause of generation of SFD, coating defect of a magnetic layer can also be exemplified. In particular, for thinning a magnetic layer, a method of forming a nonmagnetic layer on a support and a thin magnetic layer on the nonmagnetic layer is known, but when the thickness of the magnetic layer is 0.2 µm or less, coating defect is liable to occur by the blending of the nonmagnetic powder in the nonmagnetic layer into the magnetic layer and the generation of minute pinholes. If such coating defect frequently occurs, the orientation property of magnetic particles lowers, and by the variation of magnetization resulting from these things, noise increases, SNR lowers and overwriting characteristics deteriorate.

### SUMMARY OF THE INVENTION

An object of the invention is to provide a coating type magnetic recording medium in particular for high density recording using an MR head, having a high SN ratio and good overwriting characteristics.

The above object of the invention can be solved by a magnetic recording medium having the following constitution.
(1) A magnetic recording medium comprising a flexible nonmagnetic support having provided thereon a magnetic layer containing ferromagnetic alloy powder and a binder, wherein the average thickness of the magnetic layer is from 0.03 to 0.2 µm, the average long axis length of the ferromagnetic alloy powder is from 10 to 65 nm, the coercive force (Hc) in the recording direction of the magnetic layer is from 180 to 290 kA/m, and the product of the Hc and the switching field distribution (SFD) in the recording direction of the magnetic layer, Hc × SFD, is from 30 to 130 kA/m.
(2) The magnetic recording medium as described in the above item (1), wherein the coefficient of variation of the acicular ratio of the ferromagnetic alloy powder (standard deviation/average value) is 25% or less.
(3) The magnetic recording medium as described in the above item (1) or (2), wherein a nonmagnetic layer containing nonmagnetic powder and a binder is provided between the nonmagnetic support and the magnetic layer, and the magnetic layer optionally further contains nonmagnetic powder bared at 20% or less of an area of a surface of a side of the magnetic layer opposite to a side of the magnetic layer in which the nonmagnetic layer is provided.

The present inventors discussed magnetic recording media suitable for high density recording in coating type magnetic recording media excellent in productivity and storage stability, thus the present invention has been achieved.

In the invention, an SN ratio can be improved by using ferromagnetic alloy powder having an average long axis length as small as from 10 to 65 nm and prescribing the coercive force (Hc) of a magnetic layer at 180 to 290 kA/m. As described above, switching field distribution (SFD) is liable to become higher and resolution and overwriting characteristics tend to lower when such fine magnetic powder is used, but in the invention it is possible to reconcile resolution with overwriting characteristics by making the product of Hc and SFD from 30 to 130 kA/m. Further, overwriting characteristics are also liable to lower by heightening Hc, but in the invention the deterioration of overwriting characteristics can be prevented by thinning a magnetic layer thickness as thin as from 0.03 to 2 µm. Thinning of a magnetic layer improves the resolution in recording and reproduction and is preferred for high density recording.

Thus, good SN ratio and overwriting characteristics can be obtained in the invention by controlling the average thickness of a magnetic layer, the average long axis length of ferromagnetic alloy powder, Hc of a magnetic layer, and the product of Hc and SFD.

For achieving the product of Hc and SFD of 30 to 130 kA/m, it is effective to lessen the variations of the shape and orientation of magnetic particles, and reduce the coating defect of a magnetic layer to thereby form a uniform magnetic layer.

Regarding the orientation of magnetic particles, as described above, since ferromagnetic alloy powders having a short average long axis length as in the invention are liable to fluctuate due to floating of the coating solution, it is preferred to lessen the variation of particle shapes. That is, the coefficient of variation of the acicular ratio of ferromagnetic alloy powder (standard deviation/average value) in the invention is preferably 25% or less.

Further, as a uniform magnetic layer, when a nonmagnetic layer is provided as the lower layer of the magnetic layer, the area ratio accounted for by the nonmagnetic powder bared on the surface of the magnetic layer is preferably 20% or less (that is, nonmagnetic powder is present at 20% or less of an area of a surface of a side of the magnetic layer opposite to a side of the magnetic layer in which the nonmagnetic layer is provided).

The present invention can provide a coating type magnetic recording medium for high density recording having a high SN ratio and excellent in overwriting characteristics. The magnetic recording medium according to the invention is suitable for use in combination with an MR head, and also excellent in productivity and storage stability.

### DETAILED DESCRIPTION OF THE INVENTION

The present invention is described in further detail below.

The magnetic recording medium in the invention comprises a flexible nonmagnetic support having provided thereon a magnetic layer containing ferromagnetic alloy powder and a binder. It is preferred to provide a nonmagnetic layer between the nonmagnetic support and the magnetic layer as the lower layer of the magnetic layer for the purpose of thinning the magnetic layer and making the magnetic recording medium suitable for high density recording. If necessary, a back coat layer can be provided on the surface of the side of the nonmagnetic support opposite to the side on which a magnetic layer is provided.. or an undercoat layer can be provided on the surface of the side of the nonmagnetic support on which a magnetic layer is provided.

These layers may comprise a monolayer of a single composition or may comprise a plurality of layers each having a different composition. When the magnetic recording medium in the invention comprises a plurality of magnetic layers, the technique disclosed in JP-A-6-13955 can be used.

### Magnetic Layer:

The average thickness d of a magnetic layer in the invention is from 0.03 to 0.2 µm, preferably from 0.05 to 0.16 µm.

Since the magnetic layer of the magnetic recording medium in the invention is thin in thickness, recording becomes a saturated recording state, therefore it is ideal that the magnetic layer thickness does not fluctuate. Practicably, it is preferred that the relationship of the standard deviation of the magnetic layer thickness σ and the average thickness d is σ/d ≦ 0.3, more preferably σ/d ≦ 0.2. As the specific means for lessening σ, the methods disclosed in Japanese Patent No. 2566096 can be exemplified. For example, a nonmagnetic layer is formed as the lower layer of a magnetic layer, and imparting a thixotropic property to a nonmagnetic coating solution for forming the nonmagnetic layer, using acicular nonmagnetic powder in the nonmagnetic layer, and adopting a wet-on-dry system of coating and drying a nonmagnetic coating solution, and then coating a magnetic coating solution for forming the magnetic layer are exemplified.

In the invention, in the case where a nonmagnetic layer is provided, it is preferred that the area ratio accounted for by nonmagnetic powder bared at the surface of the side of the magnetic layer opposite to the side of the magnetic layer in which the nonmagnetic layer is provided is preferably 20% or less, more preferably 10% or less, based on 100% of an area of the entire surface of the side of the magnetic layer opposite to the side of the magnetic layer in which the nonmagnetic layer is provided. A magnetic layer having the area ratio of 20% or less is high in magnetization uniformity, SFD can be made small (the product of Hc and SFD of the magnetic layer can be controlled), and overwriting characteristics are improved. For that sake, in a wet-on-wet system of coating a magnetic coating solution simultaneously with, or after coating and just before drying, a nonmagnetic coating solution, it is preferred to prevent the nonmagnetic powder from blending into the magnetic layer by reducing the viscosity of the magnetic coating solution, or to prevent the formation of pinholes at coating time by reducing the viscosity of the magnetic coating solution in a wet-on-dry system.

In the invention, the coercive force (Hc) measured in the recording direction of a magnetic layer is from 180 to 290 kA/m, preferably from 185 to 270 kA/m. SFD is preferably from 0.15 to 0.7, more preferably from 0.2 to 0.6. Hc × SFD is from 30 to 130 kA/m, preferably from 55 to 125 kA/m, andmorepreferably from 60 to 120 kA/m. SFD is preferably smaller, but SFD that can be actually reached is 0.15 or so. When Hc × SFD is higher than 130 kA/m, it becomes difficult to reconcile good SN ratio with good overwriting characteristics. Hc of a magnetic layer can be adjusted mainly by varying the magnetic characteristics, such as Hc, of the ferromagnetic alloy powder to be used, and SFD can be adjusted by varying the shape of the ferromagnetic alloy powder and the uniformity of magnetization of the magnetic layer.

In the invention, the residual quantity of magnetization of a magnetic layer Φr is preferably from 50 to 500 G·µm, and it is optimized in the range that the MR headused is not saturated. For example, the relationship of Φr in a deposited tape and saturation magnetization/thickness of an MR head is described in JP-A-10-134306 and Technical Report by the Association of Image Information Media, Vol. 23, No. 78, p. 21 (1999). It is also preferred to satisfy the same relationship in the coating type magnetic recording medium in the invention. As the method of setting the residual quantity of magnetization in the above range, a method of varying the amount of the binder used and the saturation magnetization of the ferromagnetic alloy powder used is exemplified. For example, when a magnetic layer is set rather thin (e.g., 0.08 µm or less) from the requirement of O/W, it is preferred to use ferromagnetic alloy powders having large σs (e.g., from 110 to 120 Am²/kg).

### Ferromagnetic alloy powder:

Ferromagnetic alloy powders for use in a magnetic layer in the invention preferably have saturation magnetization σs of 130 Am²/kg or less, more preferably from 80 to 120 Am²/kg, and still more preferably from 90 to 120 Am²/kg.

Ferromagnetic alloy powders have an average long axis length of from 10 to 65 nm, preferably from 20 to 50 nm, a short axis length of preferably from 5 to 20 nm, more preferably from 8 to 15 nm, and an acicular ratio (a long axis length/a short axis length) of preferably from 2.5 to 10, more preferably from 3 to 8. A coefficient of variation showing the distribution of an acicular ratio (a standard deviation/an average value) is preferably 25% or less, more preferably 20% or less, and still more preferably 18% or less. By controlling the coefficient of variation of the acicular ratio to be 25% or less, SFD can be made small (the product of Hc and SFD of the magnetic layer can be controlled), and overwriting characteristics can be improved.

The average particle volume of ferromagnetic alloy powders is preferably from 1,500 to 15,000 nm³, more preferably from 2,000 to 12,000 nm³, and still more preferably from 3,000 to 10,000 nm^{3.}

The coercive force (Hc) of ferromagnetic alloy powders is preferably from 180 to 290 kA/m, more preferably from 185 to 270 kA/m. The coercive force is preferably greater from the principle of recording, but considering the performances of recording heads, from 180 to 290 kA/m is suitable under the present conditions.

The crystallite size of ferromagnetic alloy powders is preferably from 5 to 25 nm, more preferably from 8 to 15 nm, and still more preferably from 8 to 12 nm.

The specific surface area (S_{BET}) measured by a BET method of ferromagnetic metal powders is preferably from 40 to 90 m²/g, more preferably from 50 to 80 m²/g.

Ferromagnetic alloy powders for use in the invention may contain the following atoms, in addition to the main component α-Fe, e.g., Al, Si, S, Sc, Ca, Ti, V, Cr, Cu, Y, Mo, Rh, Pd, Ag, Sn, Sb, Te, Ba, Ta, W, Re, Au, Hg, Pb, Bi, La, Ce, Pr, Nd, Sm, P, Co, Mn, Zn, Ni, Sr and B. For the improvement of thermal stability, Al, Si, Ta or Y can be adhered or solid-solved on the surfaces of powder particles. In particular, for rising Hc, it is preferred to contain from 5 to 40 mass% (weight%) based on Fe of Co, Sm or Nd.

Ferromagnetic alloy powders may be subjected to surface treatment with Al, Si, P or oxides of these atoms, if necessary. Further, ferromagnetic alloy powders may be treated with a dispersant, a lubricant, a surfactant and an antistatic agent in advance before dispersion.

### Binder:

Well-known binders can be used in a magnetic layer in the invention, e.g., the binders disclosed in Japanese Patent Nos. 2566096 and 2571351 can be used. It is preferred for these binders to contain functional groups (e.g. , SO₃M, PO₃M, wherein M represents a hydrogen atom or an alkali metal salt group) for accelerating the adsorption to ferromagnetic alloy powders , and binders containing an epoxy group are also preferred. The molecular weight of binders is preferably from 10,000 to 100,000, more preferably from 20,000 to 60,000. The use amount of binders is preferably from 5 to 25 mass parts per 100 mass parts of the ferromagnetic alloy powder, more preferably from 5 to 20 mass parts, and still more preferably from 5 to 15 mass parts.

### Additives and the like:

In the invention, a magnetic layer may contain the later described various additives.

For example, it is possible to contain α-alumina and Cr₂O₃ as abrasives. The average particle size of abrasives is preferably from 1/3 to 5 times the thickness of the magnetic layer when the magnetic layer is coated by a wet-on-wet system, and from 1/3 to 2 times the thickness of the magnetic layer when coating is performed by a wet-on-dry system. When the average particle size of abrasives is too large, noise and dropout are brought about. In particular, abrasives are liable to form spines by wet-on-dry coating, so that fine particles are preferred.

In addition to the above, solid lubricants (carbons having a particle size of 30 nm or more), and liquid lubricants, e.g., fatty acids and fatty acid esters, can be added to a magnetic layer.

Further, well-known techniques can be used in the adjustment of pH of a magnetic layer composition and surface treatment.

### Nonmagnetic Layer:

Nonmagnetic powders for use in a nonmagnetic layer as the main component are acicular powders having an average long axis length of preferably 0.2 µm or less, more preferably from 0.05 to 0.15 µm, and the acicular ratio of nonmagnetic powders is preferably smaller than the acicular ratio of the ferromagnetic alloy powder in a magnetic layer. The acicular ratio of nonmagnetic powders is preferably from 5 to 20, and more preferably the acicular ratio is in the relationship of 0.3 ≦ the acicular ratio of ferromagnetic alloy powder/the acicular ratio nonmagnetic powder ≦ 0.9.

As acicular nonmagnetic powders, oxides such as TiO₂, hematite, α-alumina, γ-alumina, ZrO₂, CeO₂, Cr₂O₃ and SiO₂ and nonmagnetic metals are specifically exemplified.

Nonmagnetic powders particularly preferably used in the invention are acicular metallic oxides having pH of 5 or more. These powders are high in an adsorbing property onto the functional groups in the binder, so that high dispersibility and mechanical strength of the coated film can be obtained and preferred.

In addition to the above, nonmagnetic powders have a DBP oil absorption amount of preferably from 5 to 100 ml/100 g, more preferably from 10 to 80 ml/100 g, and still more preferably from 20 to 60 ml/100 g, a specific gravity of preferably from 1 to 12, more preferably from 3 to 6, an ignition loss of preferably 20 mass% or less, a Mohs' hardness of 4 or more, a roughness factor of the surface of powders is preferably from 0.8 to 1.5, more preferably from 0.9 to 1.2, an adsorbing amount of stearic acid (SA) of preferably from 1 to 20 µmol/m², more preferably from 2 to 15 µmol/m², and heat of wetting at 25°C to water is preferably from 200 to 600 erg/cm².

The surfaces of nonmagnetic powders are preferably subjected to surface treatment with Al₂O₃, SiO₂, TiO₂, ZrO₂, SnO₂, Sb₂O₃ or ZnO. Al₂O₃, SiO₂, TiO₂ and ZrO₂ are particularly preferred in dispersibility. These compounds can be used in combination or can be used alone. According to purposes, a layer subjected to surface treatment by coprecipitation may be used, alternatively surfaces of particles may be covered with alumina previously, and then the alumina-covered surface may be covered with silica, or vice versa. A surface-covered layer may be a porous layer, if necessary, but a homogeneous and dense surface is generally preferred.

In addition to acicular nonmagnetic powders, it is preferred that particulate powders having an average particle size of 50 nm or less, preferably 40 nm or less, and a true specific gravity of 5 or less are blended in a nonmagnetic layer in an amount of from 5 to 30 mass parts per 100 mass parts of the acicular nonmagnetic powders. As such particulate powders, oxides such as TiO₂, hematite, alumina, ZrO₂, CeO₂, Cr₂O₃ and SiO₂, nonmagnetic metals, organic resin fillers and carbon blacks are used. Carbon blacks having an average particle size of 30 nm or less are particularly preferred.

The binders used in a nonmagnetic layer may be the same as those used in a magnetic layer, but it is preferred to contain functional groups capable of accelerating dispersibility (e. g. , SO₃M, PO₃M, wherein M represents a hydrogen atom or an alkali metal salt group). The molecular weight of binders is preferably from 20,000 to 50,000, more preferably from 30,000 to 50,000. When the molecular weight is too high, calendering effect is liable to deteriorate.

For increasing the dispersibility of nonmagnetic powder and binder, it is more effective not only to use the binders having functional groups but also for nonmagnetic powders to be subjected to surface treatment with alumina and aromatic phosphorus compounds that accelerate dispersion.

These techniques are disclosed in detail in Japanese Patent Nos. 2566088 and 2634792, and the techniques disclosed in these patents are applicable to the invention.

The thickness of a nonmagnetic layer is preferably from 0.3 to 3 µm, more preferably from 0.5 to 2 µm.

### Binder:

Polyisocyanates can be used in a magnetic layer and a nonmagnetic layer as the binders in the invention. The specific examples of polyisocyanates include isocyanates, e.g., tolylene diisocyanate, 4,4'-diphenylmethane diisocyanate, hexamethylene diisocyanate, xylylene diisocyanate, naphthylene-1,5-diisocyanate, o-toluidine diisocyanate, isophorone diisocyanate and triphenylmethane triisocyanate; products of these isocyanates with poly- alcohols; and polyisocyanates formed by condensation reaction of isocyanates. These compounds may be used alone, or in combination of two or more taking advantage of the difference in curing reactivity.

Binders including the above polyisocyanates can be used in the layers other than a magnetic layer and a nonmagnetic layer, e.g., a back coat layer. When a magnetic layer comprises two or more layers, these binders can be used in each magnetic layer. In that case, the amount of the binder, the amounts of vinyl chloride resins, polyurethane resins, polyisocyanate or other resins contained in the binder, the molecular weight of each resin constituting the magnetic layer, the amount of polar groups, or the physical properties of resins can of course be varied in a nonmagnetic layer, a back coat layer and each magnetic layer, according to necessity. These factors should be rather optimized in each layer. Well-known prior arts with reference to multilayer magnetic layers can be used in the invention. For example, when the amount of a binder is varied in each layer, it is effective to increase the amount of a binder contained in a magnetic layer to reduce scratches on the surface of the magnetic layer. For improving the head touch against a head, it is effective to increase the amount of a binder in a nonmagnetic layer to impart flexibility.

### Additive:

### Carbon black:

A magnetic layer, a nonmagnetic layer, a back coat layer and other layers in the invention can use carbon blacks, e.g., furnace blacks for rubbers, thermal blacks for rubbers, carbon blacks for coloring, and acetylene blacks are exemplified.

Carbon blacks for use in the invention preferably have a specific surface area of from 5 to 500 m²/g, a DBP oil absorption amount of from 10 to 400 ml/100 g, a particle size of from 5 to 300 nm, a pH value of from 2 to 10, a moisture content of from 0.1 to 10 mass%, and a tap density of from 0.1 to 1 g/ml.

Carbon blacks may be surface-treated with a dispersant, may be grafted with resins, or a part of the surface may be graphitized in advance before use. Carbon blacks may be previously dispersed in a binder before being added to a magnetic coating solution. Carbon blacks can be used alone or in combination.

It is preferred to use carbon blacks in an amount of from 0.1 to 30 mass% based on the ferromagnetic alloy powder or the nonmagnetic powder.

Carbon blacks can serve functions such as the prevention of static charge, the reduction of a friction coefficient, the impartation of a light-shielding property, and the improvement of film strength. Such functions vary by the kind of the carbon black to be used. Accordingly, it is of course possible to select and determine the kinds, amounts and combinations of carbon blacks according to the layer to be added to, on the basis of the above described various properties such as the particle size, the oil absorption amount, the electrical conductance and the pH value.

With respect to carbon blacks usable in the invention, Carbon Black Binran (Handbook of Carbon Blacks) (edited by Carbon Black Association) can be referred to.

### Abrasive:

As the abrasives usable in the invention, well-known materials principally having a Mohs' hardness of 6 or more are used alone or in combination, e.g., α-alumina having an α-conversion rate of 90% or more, β-alumina, silicon carbide, chromium oxide, cerium oxide, α-iron oxide, corundum, artificial diamond, silicon nitride, silicon carbide, titanium carbide, titanium oxide, silicon dioxide, and boron nitride are exemplified.

Composites composed of these abrasives (abrasives obtained by surface-treating with other abrasives) can also be used. Compounds or elements other than the main component are often contained in abrasives, but the intended effect can be obtained so far as the content of the main component is 90 mass% or more.

Abrasives for use in the invention preferably have a tap density of from 0.3 to 2 g/ml, a moisture content of from 0.1 to 5 mass%, a pH value of from 2 to 11, and a specific surface area of from 1 to 30 m²/g. The shape of the abrasives to be used in the invention may be any of acicular, spherical and die-like shapes. Preferably, the abrasives have a shape partly with edges, since a high abrasive property can be obtained.

It is of course possible to select and determine the kinds, amounts and combinations of abrasives according to the layers to be added to, such as a magnetic layer and a nonmagnetic layer. Abrasives may be previously dispersed in a binder before being added to a coating solution.

### Other additives:

Additives having a lubricating effect, an antistatic effect, a dispersing effect and a plasticizing effect can be used in the invention. For example, molybdenum disulfide, tungsten graphite disulfide, boron nitride, graphite fluoride, silicone oil, polar group-containing silicones, fatty acid-modified silicones, fluorine-containing silicones, fluorine-containing alcohols, fluorine-containing esters, polyolefins, polyglycols, alkyl phosphates and alkali metal salts thereof, alkyl sulfates and alkali metal salts thereof, polyphenyl ethers, fluorine-containing alkyl sulfates and alkali metal salts thereof, monobasic fatty acids having from 10 to 24 carbon atoms (which may contain an unsaturated bond or may be branched) and metal salts thereof (e.g., with Li, Na, K or Cu), mono-, di-, tri-, tetra-, penta- or hexa-alcohols having from 12 to 22 carbon atoms (which may contain an unsaturated bond or maybe branched), alkoxy alcohols having from 12 to 22 carbon atoms (which may contain an unsaturated bond or may be branched), fatty acid monoesters, fatty acid diesters or fatty acid triesters composed of a monobasic fatty acid having from 10 to 24 carbon atoms (which may contain an unsaturated bond or may be branched) and any one of mono-, di-, tri-, tetra-, penta- and hexa-alcohols having from 2 to 12 carbon atoms (which may contain an unsaturated bond or may be branched), fatty acid esters of monoalkyl ethers of alkylene oxide polymerized products, fatty acid amides having from 8 to 22 carbon atoms, and aliphatic amines having from 8 to 22 carbon atoms are exemplified.

The specific examples of fatty acids include lauric acid, myristic acid, palmitic acid, stearic acid, behenic acid, oleic acid, linoleic acid, linolenic acid and elaidic acid. The specific examples of esters include butyl stearate, octyl stearate, amyl stearate, isooctyl stearate, octyl myristate, butoxyethyl stearate, anhydrosorbitan monostearate, anhydrosorbitan distearate, and anhydrosorbitan tristearate. The specific examples of alcohols include oleyl alcohol and stearyl alcohol.

As additives, nonionic surfactants such as alkylene oxides, glycerols, glycidols and alkylphenol-ethylene oxide adducts; cationic surfactants such as cyclic amines, ester amides, quaternary ammonium salts, hydantoin derivatives, heterocyclic rings, phosphoniums or sulfoniums; anionic surfactants containing an acidic group such as carboxylic acid, sulfonic acid, phosphoric acid, sulfuric ester groups and phosphoric ester groups; and amphoteric surfactants such as amino acids, aminosulfonic acids, sulfuric or phosphoric esters of amino alcohols, and alkylbetaines can also be used. The details of these surfactants are described in Kaimen Kasseizai Binran (Handbook of Surfactants), Sangyo Tosho Publishing Co., Ltd.

These lubricants and antistatic agents need not be 100% pure and may contain impurities such as isomers, unreacted products, byproducts, decomposed products and oxides, in addition to the main component. However, the content of such impurities is preferably 30% or less, more preferably 10% or less.

The kinds and the amounts of these dispersants for use in the invention can be used differently in each layer according to necessity. For example, a nonmagnetic layer and a magnetic layer can separately contain different fatty acids each having a different melting point so as to prevent bleeding out of the fatty acids to the surface, or different esters each having a different boiling point and a different polarity so as to prevent bleeding out of the esters to the surface. Also, the amount of a surfactant is controlled so as to improve the coating stability, or the amount of a lubricant in a nonmagnetic layer is made larger so as to improve the lubricating effect. The examples are by no means limited thereto. All or a part of the additives used in the invention may be added to a coating solution in any step of preparation. For example, additives may be blended with ferromagnetic alloy powder before a kneading step, may be added in a step of kneading ferromagnetic alloy powder, a binder and a solvent, may be added in a dispersing step, may be added after a dispersing step, or may be added just before coating. According to the purpose, there is a case of capable of attaining the object by coating all or a part of the additives simultaneously with or successively after the coating of a magnetic layer. Further, according to the purpose, lubricants may be coated on the surface of a magnetic layer after the calendering treatment or after the completion of slitting.

### Coating solvent:

Organic solvents usable in coating solutions for forming a magnetic layer and the like are used in an arbitrary rate in the invention. The examples of organic solvents include ketones, e.g., acetone, methyl ethyl ketone, methyl isobutyl ketone, diisobutyl ketone, cyclohexanone, isophorone and tetrahydrofuran; alcohols, e.g., methanol, ethanol, propanol, butanol, isobutyl alcohol, isopropyl alcohol and methylcyclohexanol; esters, e.g., methyl acetate, butyl acetate, isobutyl acetate, isopropyl acetate, ethyl lactate and glycol acetate; glycol ethers, e.g., glycol dimethyl ether, glycol monoethyl ether and dioxane; aromatic hydrocarbons, e.g., benzene, toluene, xylene, cresol and chlorobenzene; chlorinated hydrocarbons, e.g., methylene chloride, ethylene chloride, carbon tetrachloride, chloroform, ethylene chlorohydrin and dichlorobenzene; and N,N-dimethylformamide and hexane. These organic solvents need not be 100% pure and they may contain impurities such as isomers, unreacted products, byproducts, decomposed products, oxides and water content in addition to their main components. However, the content of such impurities is preferably 30% or less, and more preferably 10% or less.

The organic solvent used in a magnetic layer and a nonmagnetic layer is preferably the same kind. The addition amount may be different. It is preferred to use organic solvents having high surface tension (e.g., cyclohexanone and dioxane) in a nonmagnetic layer to thereby increase coating stability. Specifically, it is preferred for the arithmetic mean value of the surface tension of the composition of the solvents in a magnetic layer not to be lower than the arithmetic mean value of the surface tension of the composition of the solvents in a nonmagnetic layer.

For improving dispersibility, the porality is preferably strong in a certain degree, and it is preferred that solvents having a dielectric constant of 15 or more account for 50% or more of the composition of the solvents. The dissolution parameter of solvents is preferably from 8 to 11.

### Back coat layer and undercoat layer:

An undercoat layer maybe provided in the invention between the support and the lower layer for increasing adhesion. The thickness of an undercoat layer is preferably from 0.01 to 2 µm, more preferably from 0.02 to 0.5 µm.

Further, a back coat layer may be provided on the side of the support opposite to the side on which a magnetic layer is provided. The thickness of a back coat layer is preferably from 0.1 to 2 µm, more preferably from 0.3 to 1.0 µm.

Well-known undercoat layers and back coat layers can be used in the invention.

### Flexible Nonmagnetic Support:

The thickness of a flexible nonmagnetic support for use in the invention is preferably from 1 to 100 µm, more preferably from 3 to 80 µm.

Well-known films such as polyesters, e.g., polyethylene terephthalate and polyethylene naphthalate, polyolefins, cellulose triacetate, polycarbonate, polyamide, polyimide, polyamideimide, polysulfone, aramid and aromatic polyamide can be used as a flexible nonmagnetic support.

These supports may be subjected in advance to corona discharge treatment, plasma treatment, adhesion assisting treatment, heating treatment or dust-removing treatment.

When the magnetic recording medium in the invention is used as a magnetic tape, the support has a Young's modulus in the MD direction of preferably from 400 to 1,500 kg/mm², more preferably from 500 to 1,300 kg/mm², a Young's modulus in the TD direction of preferably from 500 to 2,000 kg/mm², more preferably from 700 to 1,800 kg/mm², and TD/MD ratio of a Young's modulus of preferably from 1/1 to 1/5, more preferably from 1/1 to 1/3.

The support in the invention has a thermal shrinkage factor in the tape running direction and the transverse direction at 100°C for 30 minutes of preferably 3% or less, more preferably 1.5% or less, a thermal shrinkage factor at 80°C for 30 minutes of preferably 1% or less, more preferably 0.5% or less, and a breaking strength in both directions of preferably from 5 to 100 kg/mm².

### Manufacture of magnetic recording medium:

The manufacturing processes of a magnetic coating solution and a nonmagnetic coating solution of the magnetic recording medium in the invention comprise at least a kneading step, a dispersing step and optionally a blending step to be carried out before and/or after the kneading and dispersing steps. Each of these steps may be composed of two or more separate stages. All of the feedstocks such as ferromagnetic alloy powder, nonmagnetic powder, a binder, a carbon black, an abrasive, an antistatic agent, a lubricant and a solvent for use in the invention may be added at any step at any time. Each feedstock may be added at two or more steps dividedly. For example, polyurethane can be added dividedly at a kneading step, a dispersing step, or a blending step for adjusting viscosity after dispersion.

In manufacturing a magnetic recording medium comprising a multilayer constitution of a nonmagnetic layer and a magnetic layer, the following coating apparatus and methods can be used.
(1) A method of coating a nonmagnetic layer in the first place by any of a gravure coating apparatus, a roll coating apparatus, a blade coating apparatus, and an extrusion coating apparatus, which are ordinarily used in the coating of a magnetic coating solution, and then coating a magnetic layer while the nonmagnetic layer is still wet by means of a support-pressing type extrusion coating apparatus as disclosed in JP-B-1-46186 (the term "JP-B" as used herein means an "examined Japanese patent publication"), JP-A-60-238179 and JP-A-2-265672.
(2) A method of coating a magnetic layer and a nonmagnetic layer almost simultaneously by using a coating head equipped with two slits for feeding coating solutions as disclosed in JP-A-63-88080, JP-A-2-17971 and JP-A-2-265672.
(3) A method of coating a magnetic layer and a nonmagnetic layer almost simultaneously by using an extrusion coating apparatus equipped with a backup roll as disclosed in JP-A-2-174965.

For preventing the reduction of electromagnetic characteristics of a magnetic recording medium due to the agglomeration of magnetic particles, it is preferred to impart shear to the coating solution in coating head by the methods as disclosed in JP-A-62-95174 and JP-A-1-236968. With respect to the viscosity of a coating solution, itis preferred to satisfy the range of numeric values disclosed in JP-A-3-8471.

After coating a magnetic coating solution, the ferromagnetic alloy powder is subjected to orientation. At this time, it is preferred to use the same pole and counter position magnets of a solenoid of 1,000 G or higher and a cobalt magnet of 2,000 G or higher in combination, and it is preferred to provide a proper drying process preliminarily before orientation, so that the orientating property after drying becomes the highest. When the magnetic recording medium is a disc medium, randomized orientation is rather necessary.

It is preferred to perform calendering treatment after orientation. Heat resisting plastic rolls, e.g., epoxy, polyimide, polyamide and polyimideamide can be used as the rolls for calendering treatment. Metal rolls can also be used. The treatment temperature is preferably 70°C or more, more preferably 80°C or more. The linear pressure is preferably 200 kg/cm or more, and more preferably 300 kg/cm or more.

### Characteristics of medium:

In the magnetic recording medium in the invention, the friction coefficient against the magnetic layer surface and SUS 420J of the opposite surface is preferably 0.5 or less, more preferably 0.3 or less, and the surface intrinsic viscosity is preferably from 10⁴ to 10¹² Ω/sq**.**

The elastic modulus at 0.5% elongation of a magnetic layer is preferably from 100 to 2, 000 kg/mm² in both running direction and transverse direction, and the breaking strength is preferably from 1 to 30 kg/cm².

The elastic modulus of a magnetic recording medium is preferably from 100 to 1,500 kg/mm² in both running direction and transverse direction, the residual elongation is preferably 0.5% or less, and the thermal shrinkage factor at every temperature of 100°C or less is preferably 1% or less, more preferably 0.5% or less, and most preferably 0.1% or less.

The glass transition temperature of a magnetic layer (the maximum point of the loss elastic modulus by dynamic viscoelasticity measurement at 110 Hz) is preferably from 50°C to 120°c, and that of a nonmagnetic layer is preferably from 0°C to 100°C. The loss elastic modulus is preferably in the range of from 1x10⁸ to 8x10⁹ dyne/cm², and the loss tangent is preferably 0.2 or less. When the loss tangent is too large, adhesion failure is liable to occur.

The residual amount of a solvent in a magnetic layer is preferably 100 mg/m² or less, more preferably 10 mg/m² or less. The void ratio of a nonmagnetic layer and a magnetic layer is preferably 30% by volume or less, more preferably 20% by volume or less. The void ratio is preferably smaller for obtaining high output but in some cases a specific value should be preferably secured depending on purposes.

In roughness spectrum, the strength of roughness factor of the surface of a magnetic layer at wavelength of from 1 to 5 µm is preferably 0.2 nm² or less, and the strength of roughness factor at wavelength of from 0.5 to 1.0 µm is preferably from 0.02 to 0.1 nm². For improving SNR, the roughness strength is preferably the smaller, but for increasing running durability, it is preferred to retain the strength of roughness factor of 0.02 to 0.1 nm² at wavelength of from 0.5 to 1.0 µm.

These physical characteristics can be varied according to purposes in a nonmagnetic layer and a magnetic layer of the magnetic recording medium of the invention. For example, running durability can be improved by making the elastic modulus of the magnetic layer higher and at the same time the head touching of the magnetic recording medium can be improved by making the elastic modulus of the nonmagnetic layer lower than that of the magnetic layer. With respect to the physical characteristics given to each layer of two or more magnetic layers, well-known techniques concerning the magnetic layer of multilayer constitution can be referred to. For example, making the Hc of a magnetic layer higher than the Hc of a nonmagnetic layer is known by JP-B-37-2218 and JP-A-58-56228, but recording becomes possible with a magnetic layer having a higher Hc by making a magnetic layer thin as in the invention.

### EXAMPLE

The invention will be described more specifically with referring to examples. In the examples "parts" means "mass parts" unless otherwise indicated.

### EXAMPLE 1

| (1) Composition of nonmagnetic layer coating solution | |
|---|---|
| Nonmagnetic powder, α-Fe₂O₃ | 80 parts |
| Average long axis length: 0.15 µm | |
| Acicular ratio: 8.5 | |
| Specific surface area (S_{BET}) : 56 m²/g | |
| pH: 8 | |
| Fe₂O₃ content: 90% or more | |
| DBP oil absorption amount: from 27 to 38 ml/100 g | |
| Surface treating compound: Al₂O₃ | |
| Carbon black | 20 parts |
| Average primary particle size: 16 nm | |
| DBP oil absorption amount: 80 ml/100 g | |
| pH: 8.0 | |
| Specific surface area (S_{BET}) : 250 m²/g | |
| Volatile content: 1.5% | |
| Vinyl chloride copolymer | 10 parts |
| (MR-110, manufactured by Nippon Zeon Co., Ltd.) | |
| Polyester-polyurethane resin | 5 parts |
| Molecular weight: 35,000 | |
| Neopentyl glycol/caprolactone polyol/MDI | |
| = 0.9/2.6/1 | |
| -SO3N group content: 1×10⁻⁴ eq/g | |
| Butyl stearate | 1 part |
| Stearic acid | 1 part |
| Methyl ethyl ketone | 100 parts |
| Cyclohexanone | 50 parts |
| Toluene | 50 parts |

| (2) Composition of magnetic layer coating solution | |
|---|---|
| Ferromagnetic alloy powder | 100 parts |
| Composition: Fe/Co = 75/25 | |
| Hc: 191 kA/mk | |
| Specific surface area (S_{BET}) : 63 m²/g | |
| Crystallite size: 12 nm | |
| Surface treating compounds: Al₂O₃ | |
| Particle size (long axis length): 45 nm | |
| Acicular ratio: 4.5 (coefficient of variation: 15%) | |
| σₛ : 112 Am²/kg | |
| Vinyl chloride copolymer | 5 parts |
| (MR-110, manufactured by Nippon Zeon Co., Ltd.) | |
| Polyester-polyurethane resin | 3 parts |
| Molecular weight: 35,000 | |
| Neopentyl glycol/caprolactone polyol/MDI | |
| = 0.9/2.6/1 | |
| -SO3Na group content: 1×10⁻⁴ eq/g | |
| α-Alumina | 5 parts |
| particle size: 0.1 µm | |
| Carbon black | 0.5 parts |
| particle size: 0.10 µm | |
| Butyl stearate | 1.5 parts |
| Stearic acid | 0.5 parts |
| Methyl ethyl ketone | 120 parts |
| Cyclohexanone | 120 parts |
| Toluene | 60 parts |

With each of the above two coating solutions, components were kneaded in a continuous kneader and then dispersed in a sand mill. Polyisocyanate was added in an amount of 3 parts to the dispersion of the nonmagnetic layer coating solution and 1 part to the dispersion of the magnetic layer coating solution. Further, 40 parts of a mixed solvent of methyl ethyl ketone and cyclohexanone was added to each solution, and each solution was filtered through a filter having an average pore diameter of 1 µm to obtain coating solutions for forming a nonmagnetic layer and a magnetic layer. The thus prepared nonmagnetic layer coating solution was coated in a dry thickness of 1.2 µm on a polyethylene naphthalate support having a thickness of 5.5 µm, a Young's modulus in the MD direction of 600 kg/mm², and a Young's modulus in the TD direction of 900 kg/mm², and immediately after that the magnetic layer coating solution was coated in a dry thickness of 0.1 µm by simultaneous multilayer-coating. The coated layers were subjected to orientation with a cobalt magnet having a magnetic force of 3, 000 G and a solenoid having a magnetic force of 1,500 G while both layers were still wet, and they drying. After drying, the sample was subjected to surface smoothing treatment with the calender, and slit to a width of 1/2 inch, whereby a magnetic tape was obtained.

### EXAMPLES 2 TO 6 AND COMPARATIVE EXAMPLES 1 TO 3

Magnetic tapes having the characteristics as shown in Table 1 below were prepared in the same manner as in Example 1. The bare rates of nonmagnetic powders in each Example and Comparative Example were adjusted by varying the viscosities of coating solutions of the magnetic layer and the nonmagnetic layer of each sample depending upon the solid components used. The viscosity can be adjusted by the solids concentration of each coating solution. Viscosity ratio of the magnetic layer coating solution and the nonmagnetic layer coating solution (magnetic layer/nonmagnetic layer) in each Example and Comparative Example (measured with a Brookfield viscometer) is shown in Table 1. It is preferred in the invention that the viscosity ratio is smaller than 1.0.

In each Example and Comparative Example, Hc and SFD in the recording direction of the magnetic layer, the acicular ratio of the ferromagnetic alloy powder, and the area ratio accounted for by the nonmagnetic powder bared on the surface of the magnetic layer were measured according the measuring methods shown below.
(1) Hc, SFD
   Hc and SFD were measured at the externally appl iedmagnetic field of 10 kOe (796 kA/m) with VSM (a product manufactured by Toei Industry Co., Ltd.).
(2) Acicular ratio of ferromagnetic alloy powder
   The particles of ferromagnetic alloy powder were photographed with TEM (a transmission electron microscope) by 100,000 magnifications, the long axis lengths and the short axis lengths of 500 particles were measured, from which the ratio of short axis length/long axis length was found, and the average value of the ratio was taken as the acicular ratio.
(3) Area ratio accounted for by the nonmagnetic powder bared at the surface of the side of the magnetic layer opposite to the side of the magnetic layer in which the nonmagnetic layer is provided (bare rate)

Each medium was magnetized by direct current, and the medium was developed at magnetic colloid having an average particle size of 15 nm. The developed magnetic layer surface was observed with SEM (a scanning electron microscope) at 10,000 magnifications, and the area of the part free from magnetic colloid was searched out with an image analyzer, the area ratio to the entire area was computed and this was defined as the bare rate.

The performances of each obtained magnetic tape were evaluated as follows. The results obtained are shown in Table 1 below.
(1) BB-SNR (broadband SNR)
   A head for LTO Gen 2 was attached to a plate tester and measurement was performed at a relative rate of 4 m/sec. Rectangular wave signals of magnetic flux revolution density of 150 kfci were recorded by optimal recording current, the reproduced signals were analyzed by frequency with a spectrum analyzer, and from the spectrum obtained, the ratio of the recording signal output to the integral noise power of broadband was taken as BB-SNR, and expressed by dB. The greater the value, the more excellent is BB-SNR.
(2) Overwriting erasure rate
   The same apparatus as used in above (1) was used. In the first place, signals of 37.5 kfci were recorded and reproduction output V1 was measured. In the next place, signals of 150 kfci were recorded at the same place and reproduced signal output V2 of 37.5 kfci was measured. Overwriting erasure rate was calculated by 20log(V2/V1). The smaller the value, the more excellent are the overwriting characteristics.

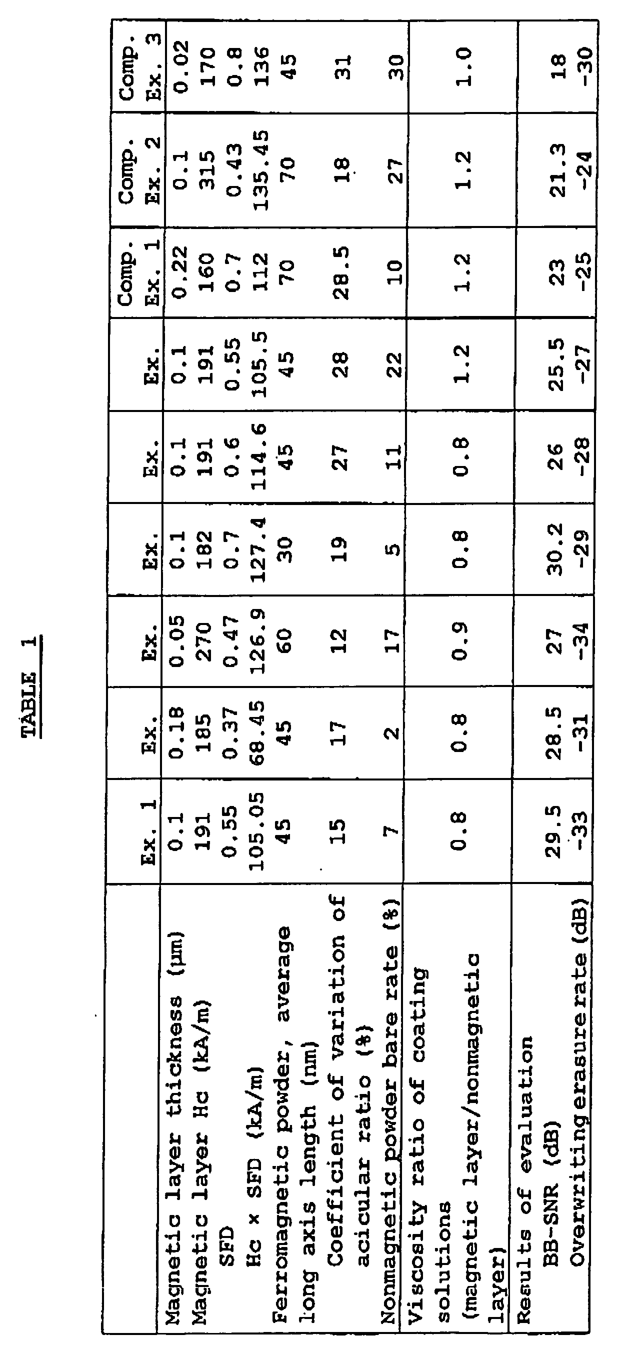

As shown in Table 1, the magnetic tapes in Examples are excellent in both SNR and overwriting erasure rate as compared with the magnetic tapes in Comparative Examples.

The magnetic tape in Example 2 is small in Hc × SFD, high in SNR, and excellent in overwriting erasure rate, although the thickness of the magnetic layer is rather thick. The magnetic tape in Example 3, in which the magnetic layer thickness is thin and magnetic particles are great, shows good overwriting erasure rate, excellent SNR although a little low. Themagnetic tape in Example 4, in which magnetic particles are small, shows high SNR and a little low overwriting erasure rate. From the results in Examples 5 and 6, it can be seen that when the coefficient of variation of magnetic particles and the acicular ratio of nonmagnetic powders are great, SNR and overwriting erasure rate become a little low.

This application is based on Japanese Patent application JP 2004-28928, filed February 5, 2004, the entire content of which is hereby incorporated by reference, the same as if set forth at length.

## Claims

1. A magnetic recording medium comprising a flexible nonmagnetic support and a magnetic layer containing ferromagnetic alloy powder and a binder, wherein the magnetic layer has an average thickness of from 0.03 to 0.2 µm, the ferromagnetic alloy powder has an average long axis length of from 10 to 65 nm, the magnetic layer has a coercive force in a recording direction of from 180 to 290 kA/m, and a product of the coercive force and a switching field distribution in the recording direction of the magnetic layer is from 30 to 130 kA/m.

2. The magnetic recording medium according to claim 1, wherein the ferromagnetic alloy powder has a coefficient of variation of an acicular ratio (standard deviation/ average value) is 25% or less.

3. The magnetic recording medium according to claim 1, further comprising a nonmagnetic layer containing nonmagnetic powder and a binder between the nonmagnetic support and the magnetic layer, wherein the magnetic layer optionally further contains nonmagnetic powder bared at 20% or less of an area of a surface of a side of the magnetic layer opposite to a side of the magnetic layer in which the nonmagnetic layer is provided.

4. The magnetic recording medium according to claim 3, wherein the magnetic layer optionally further contains nonmagnetic powder bared at 10% or less of an area of a surface of a side of the magnetic layer opposite to a side of the magnetic layer in which the nonmagnetic layer is provided.

5. The magnetic recording medium according to claim 1, wherein the magnetic layer has an average thickness of from 0.05 to 0.16 µm.

6. The magnetic recording medium according to claim 1, wherein the ferromagnetic alloy powder has an average long axis length of from 20 to 50 nm.

7. The magnetic recording medium according to claim 1, wherein the magnetic layer has a coercive force in a recording direction of from 185 to 270 kA/m.

8. The magnetic recording medium according to claim 1, wherein a product of the coercive force and a switching field distribution in the recording direction of the magnetic layer is from 55 to 125 kA/m.
